(19) Europäisches Patentamt
European Patent Office
Office européen des brevets

(11) Veröffentlichungsnummer : **0 050 264**
**B1**

(12) **EUROPÄISCHE PATENTSCHRIFT**

(45) Veröffentlichungstag der Patentschrift : **18.01.84**

(51) Int. Cl.³ : **B 01 J 13/02**

(21) Anmeldenummer : **81107957.3**

(22) Anmeldetag : **06.10.81**

(54) **Verfahren zur Herstellung von Mikrokapseln.**

(30) Priorität : **16.10.80 DE 3039117**

(43) Veröffentlichungstag der Anmeldung : **28.04.82 Patentblatt 82/17**

(45) Bekanntmachung des Hinweises auf die Patenterteilung : **18.01.84 Patentblatt 84/03**

(84) Benannte Vertragsstaaten : **DE FR GB IT**

(56) Entgegenhaltungen :
**DE-A- 2 312 059**
**DE-A- 2 453 853**
**DE-A- 2 648 562**
**DE-A- 2 855 065**
**FR-A- 2 090 862**
**US-A- 4 076 774**

(73) Patentinhaber : **BAYER AG**
**Zentralbereich Patente, Marken und Lizenzen**
**D-5090 Leverkusen 1, Bayerwerk (DE)**

(72) Erfinder : **Nehen, Ulrich, Dr.**
**Rueckertstrasse 10**
**D-5090 Leverkusen 1 (DE)**
Erfinder : **Hajek, Manfred, Dr.**
**Hahnenweg 1**
**D-5000 Koeln 80 (DE)**
Erfinder : **Weimann, Norbert, Dr.**
**Heymannstrasse 32**
**D-5090 Leverkusen 1 (DE)**
Erfinder : **Dahm, Manfred, Dr.**
**Am Falkenberg 29**
**D-5090 Leverkusen 31 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 050 264 B1

Verfahren zur Herstellung von Mikrokapseln

Die vorliegende Erfindung betrifft ein Verfahren zur Herstellung von Mikrokapseln nach dem Grenzflächenpolymerisationsverfahren mit Hilfe von kapselwandbildenden Verbindungen, von denen eine in verkappter Form vorliegen muß.

Es sind bereits zahlreiche Verfahren zur Herstellung von Mikrokapseln nach dem Grenzflächenpolymerisationsverfahren beschrieben worden. Sie bedienen sich in der Regel eines Systems, das aus mindestens zwei Phasen besteht. In der diskontinuierlichen Phase (Kernmaterial) liegt die eine, zur Wandbildung befähigte Substanz gelöst vor, sie muß in der kontinuierlichen Phase ungelöst sein. In der kontinuierlichen Phase befindet sich die andere, zur Wandbildung befähigte Substanz, sie muß in der diskontinuierlichen Phase unlöslich sein. An der Grenzfläche zwischen den beiden Phasen erfolgt eine Polymerisationsreaktion der beiden wandbildenden Substanzen unter Ausbildung einer das Kernmaterial umschließenden Hülle.

Die Hülle oder Kapselwand muß in beiden Phasen unlöslich sein. Bei diesen Verfahren kann entweder die eine oder die andere Phase aus einem wäßrigen System bestehen. Solche Verfahren sind in den US-Patentschriften 3 575 882, 3 577 515 und 3 429 827, sowie in der DE-Auslegeschrift 15 19 925 beschrieben.

Von Nachteil bei diesen Verfahren ist die Tatsache, daß nach Ausbildung einer ersten, äußerst dünnen Kapselmembran der gegenseitige Kontakt der wandbildenden Verbindungen erschwert sein oder sogar unmöglich werden kann. Das hat zur Folge, daß sowohl das Kernmaterial als auch die wäßrige Phase mit nicht umgesetztem Material verunreinigt bleibt, und dadurch die Kapselwanddicke schwerer einstellbar ist.

In der DE-Offenlegungsschrift 23 12 059 wird ein Verfahren offenbart, bei dem die Bildung der Kapselwand nach dem Grenzflächenpolymerisationsverfahren dadurch erfolgt, daß ein Isocyanat-Monomer unter Bildung des entsprechenden Amins hydrolysiert wird, welches seinerseits mit einem weiteren Isocyanat-Monomer unter Bildung der Polyharnstoffkapsel reagiert. Von Nachteil ist, daß während der Hydrolyse des monomeren Isocyanats Kohlendioxid freigesetzt wird, das zu unerwünschter Schaumbildung sowie zum Druckaufbau beim Lagern von Kapselslurries in verschlossenen Behältern führen kann. Zur Behebung dieser Nachteile ist eine Reihe von zusätzlichen Maßnahmen erforderlich.

Eine dieser Maßnahmen wird z. B. in der DE-Offenlegungsschrift 27 06 329 beschrieben und sieht eine Nachbehandlung der Mikrokapseln mit Ammoniak oder Aminen vor. Ein weiterer Nachteil besteht in der äußerst geringen Variationsmöglichkeit der Kapseleigenschaften durch den chemischen Aufbau der aus Polyharnstoff bestehenden Kapselwand.

In der US-Patentschrift 4 076 774 wird die Herstellung von doppelwandigen Mikrokapseln beschrieben, bei der das im Kern befindliche Polyisocyanat zunächst teilweise mit einem in der den Kern umgebenden wäßrigen Phase befindlichen Polyamin eine Polyharnstoffhülle bildet und anschließend mit einer ebenfalls im Kern befindlichen Polyhydroxyverbindung eine Polyurethaninnenwand aufbaut, die über Biuretgruppen mit der primär an der Phasengrenzfläche entstandenen Polyharnstoffhülle verbunden sein soll.

Das Verfahren hat einige Nachteile, die unter anderem aus dem einzigen erwähnten Beispiel ersichtlich sind. Während die äußere Hülle innerhalb weniger Minuten entsteht, werden für die Bildung der inneren Wand 7 Stunden benötigt. Das Kern-/Wand-Verhältnis beträgt maximal 13 : 87 und ist damit äußerst unwirtschaftlich. Bei der Auswahl der Polyhydroxyverbindungen muß man sich auf solche beschränken, die nicht wasserlöslich sind und keine primären Hydroxylgruppen besitzen. Letztere würden bereits beim Vermischen mit dem Polyisocyanat polymerisieren und würden beim Dispergieren in Wasser wegen der stetig anwachsenden Viskosität eine einheitliche Kapselgrößenverteilung beeinträchtigen.

In der US-Patentschrift 3 796 669 wird die Herstellung von Öl-enthaltenden Mikrokapseln beschrieben, bei der die Kapselwand aus dem Inneren der Kapsel heraus dadurch gebildet wird, daß eine Mischung aus dem einzukapselnden Öl, einem Polyisocyanat, und einer zur Reaktion mit dem Polyisocyanat befähigten, wandbildenden Verbindung in Wasser dispergiert wird, und dabei die Verkapselung des Öls erfolgt.

Hieraus ergeben sich einige Nachteile :

Da die wandbildende Verbindung mit dem Polyisocyanat reagiert, erfolgt eine Polymerisation schon beim Vermischen. Das beeinträchtigt die Verkapselung generell und erschwert erheblich die Erzielung einheitlicher Kapselwanddicken und Kapselgrößenverteilungen.

Es wurde nun gefunden, daß sich diese Nachteile vermeiden lassen, wenn man Produkte mit Hilfe des erfindungsgemäßen Verfahrens verkapselt, wobei die Kapselwandbildung durch ein Grenzflächenpolymerisationsverfahren erfolgt, bei dem die eine der wandbildenden Reaktionskomponenten in freier Form und die andere in verkappter Form vorliegt. Beide wandbildenden Reaktionskomponenten befinden sich während der Kapselherstellung gemeinsam innerhalb einer Phase und bilden an der Grenzfläche zu der anderen Phase eine Kapselwand aus.

Gegenstand der Erfindung ist also ein Verfahren zum Einkapseln von Produkten in Polymeren mit Hilfe des Grenzflächenpolymerisationsverfahrens, bei dem eine stabilisierte Dispersion von Tröpfchen

einer ersten Flüssigkeit, die eingekapselt werden soll, bzw. eine stabilisierte Dispersion von Feststoffpartikeln, die eingekapselt werden sollen, in einer die kontinuierliche Phase darstellenden zweiten Flüssigkeit gebildet wird, das dadurch gekennzeichnet ist, daß die eine der kapselwandbildenden Reaktionskomponenten in freier Form und die andere der kapselwandbildenden Reaktionskomponenten in reversibel blockierter Form vorliegt, beide Reaktionskomponenten sich entweder in der ersten oder in der zweiten Flüssigkeit befinden, ohne miteinander zu reagieren, und die in reversibel blockierter Form vorliegende Reaktionskomponente durch in der zweiten bzw. ersten Flüssigkeit befindliches Wasser deblockiert wird und dann mit der in freier Form vorliegenden Reaktionskomponente unter Bildung einer polymeren Kapselwand reagiert, wobei die Tröpfchen der ersten Flüssigkeit bzw. die Feststoffpartikel in kleine, aus Polymermaterial bestehende Kapseln eingebettet werden.

Bei dem erfindungsgemäßen Verfahren befinden sich die beiden die Kapselwand bildenden Reaktionskomponenten entweder in der diskontinuierlichen oder innerhalb der kontinuierlichen Phase, ohne miteinander in Reaktion zu treten, weil die eine der beiden Reaktionskomponenten in verkappter Form vorliegt. Durch Wasser, welches sich jeweils in der anderen, die beiden Reaktionskomponenten nicht enthaltenden Phase befindet, wird die verkappte Reaktionskomponente deblockiert und zur Reaktion mit der frei vorliegenden Reaktionskomponente unter Ausbildung einer Kapselwand an der Phasengrenzfläche befähigt.

Auf diese Weise gelangt man zu Kapseldispersionen, die voll befriedigende diskrete Kapseln enthalten, in denen die mikroverkapselten Produkte von einer Polymerisatwand umschlossen vorliegen.

In einer bevorzugten Ausführungsform der Erfindung wird eine flüssige Mischung, die aus den einzukapselnden festen oder flüssigen Produkten, den beiden frei bzw. verkappt vorliegenden Reaktionskomponenten und gegebenenfalls einem Hilfslösungsmittel besteht und als organische Phase bezeichnet wird, in einer als, wäßrige Phase bezeichneten und mit der organischen Phase praktisch nicht mischbaren Mischung aus Wasser, gegebenenfalls Schutzkolloiden und gegebenenfalls oberflächenaktiven Mitteln zur Erzielung kleiner Teilchen (Tröpfchen) dispergiert.

Durch das in der kontinuierlichen Phase befindliche Wasser wird die Reaktion zwischen den beiden Reaktionskomponenten unter Ausbildung von polymeren Kapselwänden an der Phasengrenzfläche ermöglicht.

In einer anderen erfindungsgemäßen Ausführungsform ist es möglich, Wasser oder in wäßriger Lösung oder Dispersion vorliegende Produkte einzukapseln. In diesem Fall erzeugt man eine stabilisierte diskontinuierliche wäßrige Phase, welche die einzukapselnden Produkte enthält, in einer mit Wasser praktisch nicht mischbaren kontinuierlichen organischen Phase, welche die beiden in freier und in verkappter Form vorliegenden Reaktionskomponenten enthält. Dabei bilden sich wäßrige Tröpfchen, an deren Grenzfläche die verkappte Reaktionskomponente deblockiert wird und mit der freien Reaktionskomponente unter Ausbildung von polymeren Kapselwänden reagiert, wobei die wäßrigen Tröpfchen mikroverkapselt werden.

Als erfindungsgemäß einzusetzende, in freier Form vorliegende und mindestens zwei Isocyanatgruppen aufweisende Reaktionskomponenten kommen aliphatische, cycloaliphatische, araliphatische, aromatische und heterocyclische Polyisocyanate in Betracht, wie sie z. B. von W. Siefken in Justus Liebigs Annalen der Chemie, 562, Seiten 75 bis 136, beschrieben werden, beispielsweise solche der Formel

$$Q(NCO)_n,$$

in der

n = 2-4, vorzugsweise 2,

und

Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen araliphatischen Kohlenwasserstoffrest mit 8-15, vorzugsweise 8-13 C-Atomen,

bedeuten, z. B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanatao-3,3,5-trimethyl-5-isocyanatomethyl-cyclohexan (= Isophorondiisocyanat) (DE-Auslegeschrift 1 202 785, US-Patentschrift 3 401 190), Xylylen-1,4-diisocyanat, Xylylen-1,3-diisocyanat, 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenyl-methandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder- 4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylen-polyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift

1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394, sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605, sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen.

Außerdem finden sogenannte Polyisocyanatvorpolymerisate Anwendung, z. B. Anlagerungsprodukt von Hexamethylendiisocyanat und Hexantriol, Anlagerungsprodukt von 2,4-Toluylen-diisocyanat mit Brenzkatechin, Anlagerungsprodukt von Toluylen-diisocyanat mit Hexantriol, Anlagerungsprodukt von Toluylen-diisocyanat mit Trimethylolpropan, Anlagerungsprodukt von Xylylendiisocyanat mit Trimethylolpropan oder geeignete Polyisocyanate, die den vorstehend angegebenen Verbindungen analog sind.

Weitere modifizierte aliphatische Isocyanate sind solche auf Basis von 1,6-Hexamethylen-diisocyanat, m-Xylylendiisocyanat, 4,4'-Diisocyanato-dicyclohexyl-methan bzw. Isophorondiisocyanat, die pro Molekül mindestens zwei funktionelle Isocyanatgruppen besitzen.

Weitere geeignete Verbindungen sind Polyisocyanate auf Grundlage von Derivaten des Hexamethylen-1,6-diisocyanats mit Biuretstruktur, deren Herstellung aus den DE-AS 11 01 394 und 15 43 178, sowie aus den DE-OS 15 68 017 und 19 31 055 hervorgeht.

Die verwendbaren Polyisocyanate können vor dem Einsatz zur Mikroverkapselung zusätzlich modifiziert werden durch Umsetzung mit di- und trifunktionellen Kettenverlängerern, z. B. Wasser, mit mehrfunktionellen Alkoholen wie Ethandiol, Glycerin oder Trimethylolpropan bzw. Carbonsäuren wie Bernsteinsäure, Adipinsäure, Sebacinsäure in Anteilen von 0,01 bis 0,5 Mol pro Isocyanat-Äquivalent.

Zusätzlich zu den Isocyanatgruppen können als reaktive Gruppen auch Carbodiimid-, Uretdion-, Uretonimin-, Uretidindiondiimin-, 4-Imino-oxazolidinon-(2)-, β-Alkylen-propiolacton- bzw. Cyclobutandion-(1,3)-gruppen vorhanden sein.

So sind beispielsweise einsetzbar Polyisocyanato-polyuretonimine, wie sie durch Carbodiimidisierung von Biuretgruppen enthaltendem Hexamethylen-1,6-diisocyanat mit Phosphor- organischen Katalysatoren entstehen, durch weitere Umsetzung primär gebildeter Carbodiimidgruppen mit Isocyanatgruppen zu Uretonimingruppen. Weiterhin können diese Isocyanate in Mischung miteinander und anderen aliphatischen und aromatischen Isocyanaten verwendet werden.

Je nach Reaktionsbedingungen kann das resultierende modifizierte Polyisocyanat erhebliche Anteile an Oxadiazintrion, Triisocyanurat bzw. sym. Triazindionimin als Strukturelement enthalten. Auch solche Produkte eignen sich als Hüllenbildner.

Ebenfalls geeignet sind Diisocyanate der Formel I

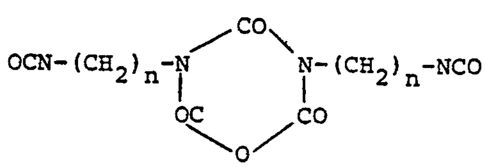

(I)

n = 3-6

Besonders bevorzugt werden in der Regel die technisch leicht zugänglichen Polyisocyanate, z. B. das 2,4- und 2,6-Toluylendiisocyanat, sowie beliebige Gemische dieser Isomeren (« TDI »), Polyphenylpolymethylen-polyisocyanate, wie sie durch Anilin-Formaldehyd-Kondensation und anschließende Phosgenierung hergestellt werden (« rohes MDI »), und Carbodiimidgruppen, Urethangruppen, Allophanatgruppen, Isocyanuratgruppen, Harnstoffgruppen oder Biuretgruppen aufweisende Polyisocyanate (« modifizierte Polyisocyanate »), insbesondere solche modifizierten Polyisocyanate, die sich vom 2,4- und/oder 2,6-Toluylendiisocyanat bzw. vom 4,4'- und/oder 2,4'-Diphenylmethandiisocyanat oder auch vom 1,6-Hexamethylen-diisocyanat und Isophorondiisocyanat ableiten.

Ebenso werden als frei vorliegende Reaktionskomponenten Umsetzungsprodukte der aufgeführten

Polyisocyanate mit Verbindungen eingesetzt, die mindestens zwei gegenüber Isocyanaten reaktionsfähige Wasserstoffatome aufweisen und ein Molekulargewicht in der Regel von 400 bis 10 000 haben.

Die Herstellung der Umsetzungsprodukte, die mindestens zwei Isocyanatgruppen besitzen müssen und im folgenden « NCO-Prepolymere » genannt werden, ist bekannt (vergl. R. Vieweg, A. Höchtlen, Kunststoff-Handbuch, Band VII, Polyurethane, Carl-Hanser-Verlag München, 1966, Seiten 84 bis 85). Die NCO-Prepolymere können in der Form, in der sie bei ihrer Herstellung anfallen, direkt für die Kapselbildung verwendet werden. Die noch in ihnen vorhandenen monomeren Isocyanate können auch durch eine destillative Behandlung, z. B. eine Dünnschichtverdampfung, entfernt werden.

Unter Verbindungen, die mindestens zwei gegenüber Isocyanaten reaktionsfähige Wasserstoffatome aufweisen, versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 400 bis 10 000, vorzugsweise 1 000 bis 10 000, z. B. mindestens zwei, in der Regel 2 bis 8, vorzugsweise aber 2 bis 4 Hydroxylgruppen aufweinsende Polyester, Polyether, Polythioether, Polyacetale, Polycarbonate und Polyesteramide ;

a) Die in Frage kommenden, Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt :

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure ; Terephthalsäuredimethylester und Terephthalsäure-bis-glykolester. Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole, sowie Dibutylenglykol und höhere Polybutylenglykole in Frage.

Die Polyester können anteilig endständige Carboxylgruppen aufweisen. Auch Polyester aus Lactonen, z. B. ε-Caprolacton, oder aus Hydroxycarbonsäure, z. B. ω-Hydroxycapronsäure, sind einsetzbar.

b) Auch die erfindungsgemäß in Frage kommenden, mindestens zwei, in der Regel zwei bis acht, vorzugsweise zwei bis drei Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wassertoffatomen wie Wasser, Alkohole, Ammoniak oder Amine, z. B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether, wie sie z. B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951) kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet ;

c) Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischether, Polythioetherester oder Polythioetheresteramide ;

d) Als Polyacetale kommen z. B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale wie z. B. Trioxan (DE-Offenlegungsschrift 1 694 128) lassen sich erfindungsgemäß geeignete Polyacetale herstellen ;

e) Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z. B. Diphenylcarbonat, oder Phosgen hergestellt werden können (DE-Auslegeschriften 1 694 080, 1 915 908 und 2 221 751 ; DE-Offenlegungsschrift 2 605 024) ;

f) Zu den Polyesteramiden und Polyamiden zählen z. B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate ;

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z. B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar ;

h) Die genannten Polyhydroxylverbindungen können vor ihrer Verwendung im Polyisocyanat-Polyadditionsverfahren noch in der verschiedensten Weise modifiziert werden : So läßt sich gemäß DE-Offenlegungsschriften 2 210 839 (US-Patentschrift 3 849 515) und 2 544 195 ein Gemisch aus verschiedenen Polyhydroxylverbindungen (z. B. aus einem Polyether- und einem Polyesterpolyol) durch Veretherung in Gegenwart einer starken Säure zu einem höhermolekularen Polyol kondensieren, welches aus über Etherbrücken verbundenen verschiedenen Segmenten aufgebaut ist. Es ist auch möglich, z. B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Prepolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrift 3 865 791 höhermolekulare endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

i) Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionelle Verbindungen) bzw. Polykondensationsreaktionen (z. B. zwischen Formaldehyd und Phenolen und/oder Aminen) in situ in den oben genannten, Hydroxylgruppen aufweisenden Verbindungen ablaugen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyethern (US-Patentschriften 3 383 351, 3 304 273, 3 523 093, 3 110 695 ; DE-Auslegeschrift 1 152 536) oder Polycarbonatpolyolen (DE-Patentschrift 1 769 795 ; US-Patentschrift 3 637 909) erhalten werden, sind für das erfindungsgemäße Verfahren geeignet.

Vertreter der genannten, erfindungsgemäß zu verwendenden Verbindungen sind z. B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400-10 000, z. B. Mischungen von Polyethern und Polyestern, eingesetzt werden.

Als reversibel blockierte Reaktionspartner für die bei dem beanspruchten Verfahren eingesetzten Polyisocyanate eignen sich grundsätzlich Verbindungen, die sich durch Wasser in eine reaktionsfähige Form überführen lassen, um dann rasch mit NCO-Gruppen weiterzureagieren. Geeignet sind daher Substanzen, die keine gegen NCO aktiven Wasserstoffe tragen, aber durch Hydrolyse in Polyamine oder Hydroxiamine übergehen. Substanzen, die diese Bedingung erfüllen, sind z. B. durch Kondensationsreaktion von geeigneten Carbonylverbindungen mit Polyaminen oder Hydroxiaminen unter Wasserabspaltung nach literaturbekannten Methoden einfach zugänglich.

Geeignete blockierte Polyamine tragen ein oder mehrere der nachstehend aufgeführten Strukturelemente :

1. 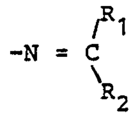 (I)

2. 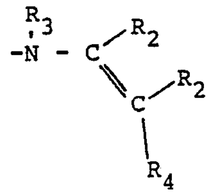 (II)

3. 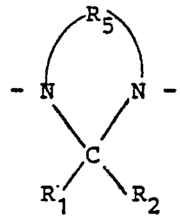 (III)

4. 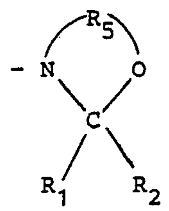 (IV)

wobei

$R_1$ bis $R_4$ gleich oder verschieden für H, einen Alkylrest, vorzugsweise mit $C_1$ bis $C_4$, einen Cycloalkylrest, vorzugsweise mit $C_4$ bis $C_8$, oder einen Arylrest, vorzugsweise $C_6$ bis $C_8$, stehen, und

$R_5$ einen Alkylenrest, vorzugsweise mit $C_2$ bis $C_4$ bedeutet.

Unter die erste Gruppe fallen Aldazine, Ketazine, Aldimine und Ketimine, die sich von Hydrazin bzw. von Verbindungen mit $NH_2$-Gruppen ableiten. Die Umsetzung von NH-Gruppen mit Carbonylverbindungen führt zu Enamingruppierungen (II).

Die cyclische Aminale (III) sind in der EP 0 001 005 beschrieben. Die N,O-Acetate (IV) werden z. B. nach den US-Patenten Nr. 4 002 601, 3 743 626, 3 661 923 und 3 864 335 hergestellt.

Als Blockierungsmittel für die Polyamine eignen sich bevorzugt z. B. folgende Aldehyde :

aliphatische Aldehyde wie Formaldehyd, Acetaldehyd, Propionaldehyd, Butyraldehyd, Isobutyraldehyd, Trimethylacetaldehyd, Heptylaldehyd, 3-Formylheptan, Hexahydrobenzaldehyd oder aromatische Aldehyde, wie 1,2,5,6-Tetrahydrobenzaldehyd, Benzaldehyd.

Als geeignete Ketone seien z. B. angeführt ;

Aceton, Methyl-ethylketon, Methyl-propyl-keton, Diethyl-keton, Methyl-isopropyl-keton, Methyl-isobutyl-keton, t-Butyl-methyl-keton, Diisobutylketon, Cyclopentanon, Cyclohexanon.

Als Polyamine bzw. Hydroxiamine eignen sich eine Vielzahl von Verbindungen, die wenigstens 2 NH-Funktionen bzw. eine NH- und eine OH-Funktion haben, vorzugsweise niedermolekulare aliphatische, bevorzugt mit $C_2$ bis $C_{10}$, aliphatisch-aromatische, bevorzugt mit $C_7$ bis $C_9$, aromatische, bevorzugt mit $C_6$ bis $C_{10}$, cycloaliphatische, bevorzugt mit $C_5$ bis $C_{10}$, oder heterocyclische, bevorzugt mit $C_4$ bis $C_6$ und Heteroatomen wie N, O oder S im Ring.

Beispielhaft seien erwähnt :

Hydrazin, Ethylendiamin, 1,3-Diaminopropan, N,N'-Dimethylethylendiamin, Diethylentriamin, Bis-(2-methylaminoethyl)-amin, Methyl-bis-(2-methylaminoethyl)-amin, Triethylentetramin, Tetraethylenpentamin, Pentaethylenhexamin, Propylendiamin, Dipropylentriamin, Tripropylentetramin, 1-Amino-3-methylaminopropan, Bis-(3-aminopropyl)-amin, Bis-(3-aminopropyl)-methylamin, 1,4-Diaminobutan, 1,6-Diaminohexan, 2,5-Trimethyl-hexandiamin, 2,2,4- und 2,4,4-Trimethylhexamethylendiamin, 1,4-Butandiol-bis-(3-aminopropylether), 1,3- und 1,4-Diaminocyclohexan, 4,4'-Diamino-dicyclohexylmethan, 1,3- und 1,4-Xylylendiamin, Isophorondiamin, 1,3- und 1,4-Diaminobenzol, Diethanolamin und Bis-(2-hydroxypropyl)-amin.

Daneben können auch höhermolekulare Polyamine, vorzugsweise mit Molekulargewichten von 1 000 bis 6 000, Verwendung finden, wie sie z. B. durch Umsetzung von Polyetherpolyolen, vorzugsweise mit Molekulargewichten von 500 bis 6 000, mit Ammoniak und Wasserstoff unter Druck in Gegenwart von geeigneten Katalysatoren entstehen, oder durch Umsetzung von Nitrogruppen enthaltenden organischen Isocyanaten, vorzugsweise p-Nitrophenylisocyanat, mit Polyetherpolyolen und anschließender Reduktion entstehen.

Eine weitere Variante besteht in der Umsetzung von Prepolymeren mit Isocyanatendgruppen mit bereits blockierten Aminen, die noch eine, gegenüber Isocyanat reaktionsfähige Gruppe, z. B. OH oder NH enthalten.

Besonders eignen sich sterisch gehinderte Polyamine und/oder sterisch gehinderte Carbonylverbindungen. Ebenso können durch Michael-Addition modifizierte Polyaldimine oder Polyketimine Verwendung finden.

Bei der praktischen Durchführung des erfindungsgemäßen Verfahrens zur Herstellung von Mikrokapseln werden zunächst die als diskontinuierliche Phase dienenden Substanzgemische separat vorbereitet und mit Hilfe von Dispergiergeräten unter Erzeugung eines Schergefälles miteinander in eine feinteilige Dispersion überführt. Wenn die erwünschte Teilchengröße erreicht ist, wird die Dispersion nur noch schwach gerührt oder stehengelassen, bis die Kapselwandbildung abgeschlossen ist. Die so hergestellte Kapseldispersion kann entsprechend ihrem Einsatzzweck in dieser Form oder nach Zugabe von stabilisierend wirkenden Hilfsmitteln benutzt werden. Ebenso ist es möglich, nach bekannten Verfahren eine Trennung der Kapseln von der kontinuierlichen Phase vorzunehmen, beispielsweise durch Filtrieren, Zentrifugieren oder Sprühtrocknen, um auf diese Weise zu einem fließfähigen Kapselpulver zu gelangen.

Für den Fall, daß die kontinuierliche Phase wäßrig ist, kann es sich als vorteilhaft erweisen, bei der Herstellung des als diskontinuierliche organische Phase dienenden Substanzgemisches zusätzlich Hilfslösungsmittel zu verwenden. Insbesondere dann, wenn die Vermischung der einzukapselnden flüssigen oder festen Produkte mit den Wandbildnern generell erschwert ist, oder die Mischung zu viskos wird, weil Feststoffpartikel eingekapselt oder feste bzw. hochviskose Wandbildner verwendet werden. Die Aufgabe der zusätzlich benutzten Hilfslösungsmittel besteht also darin, die Viskosität der diskontinuierlichen Phase zu senken, gegebenenfalls auch unlösliche Bestandteile zu lösen und/oder die Dispergierung zu der erwünschten Teilchengröße zu erleichtern.

Geeignet sind Lösungsmittel, die nicht mit Isocyanaten reagieren können und sich gegebenenfalls nach erfolgter Dispergierung oder zu einem späteren Zeitpunkt ohne Schädigung der Kapseln wieder entfernen lassen.

Bevorzugt werden niedrigsiedende Lösungsmittel verwendet, die sich leicht durch Abdampfen entfernen lassen, beispielsweise n-Pentan, Methylenchlorid, Chloroform, Ethylacetat, Methylethylketon, Tetrachlorkohlenstoff und dergleichen.

Ebenfalls geeignet sind wasserverdünnbare Lösungsmittel, die nicht mit Isocyanaten reagieren können und sich gegebenenfalls nach erfolgter Dispergierung oder zu einem späteren Zeitpunkt ohne Schädigung der Kapseln entfernen lassen. Beispiele sind Aceton, Tetrahydrofuran, Dioxan, Dimethylformamid und dergleichen.

Bei der Verkapselung von Feststoffpartikeln mit Hilfe bisher bekannter Grenzflächenpolymerisationsverfahren erweist sich die Kapselwand meist als zu wenig dicht, wenn nach Ausbildung einer ersten dünnen Membran der weitere Zutritt von wandbildenden Reaktionspartnern gebremst oder verhindert wird.

Enthält der im Kernmaterial befindliche Wandbildner Isocyanatgruppen, können diese mit Wasser, das durch die sehr dünnen Kapselmembrane eindiffundieren kann, unter Bildung von Polyharnstoff $CO_2$ entwickeln. Oft ist damit ein schaumiger und daher undichter Aufbau der Kapselwand verbunden, so daß wasserlösliche Feststoffe gar nicht oder nur äußerst unwirtschaftlich eingekapselt werden können.

Es muß daher als überraschend angesehen werden, daß eine Kapselwand dann Feststoffe wasserdicht umhüllt, wenn zu ihrer Ausbildung erfindungsgemäß Wasser erforderlich ist.

Die erfindungsgemäße Dispergierung der diskontinuierlichen Phase innerhalb der kontinuierlichen Phase kann dadurch erleichtert werden, daß Hilfsmittel in Form von Schutzkolloiden und/oder oberflächenaktiven Mitteln eingesetzt werden. Die Zugabe kann sowohl über die organische als auch über die wäßrige Phase erfolgen, wobei eine Verteilung der Mittel zwischen den Phasen nach Phasenvermischung vorliegt, je nach den relativen Löslichkeiten.

Als oberflächenaktive Mittel sind anionische, kationische und nichtionische Emulgatoren geeignet. Beispiele hierfür sind Alkylsulfonat, Alkylbenzolsulfonat, Polyoxyethylensulfonat, oxethyliertes 3-Benzylhydroxybiphenyl, Sorbitanfettsäureester, Polyoxyethylenalkylether, ethoxylierte Nonylphenole und dergleichen.

Es können auch Gemische von mindestens zwei Emulgatoren verwendet werden. Sie werden in Mengen von 0,01 bis 5 Gewichtsprozent, bezogen auf die jeweilige Phase, zugesetzt.

Beispiele für Schutzkolloide sind Polyvinylalkohole, Polyacrylate, Polyacrylamid, Gelatine, Gummi arabicum, Stärke, Casein, Carboxymethylcellulose, Hydroxyethylcellulose, Methylcellulose, Ethylcellulose, Celluloseacetobutyrat, Polyvinylpyrrolidon, Hydroxymethylcellulose, Montmorillonite und dergleichen.

Es können auch Gemische von mindestens zwei Schutzkolloiden verwendet werden. Sie werden in Mengen von 0,01 bis 10 Gewichtsprozent, vorzugsweise von 0,1 bis 5 Gewichtsprozent zugesetzt.

Die zugesetzte Menge der erwähnten Dispergierhilfsmittel hängt beispielsweise von den Eigenschaften aller an der Verkapselung beteiligten Substanzen, den Reaktionsbedingungen, der angestrebten Kapseldurchmesser, der Rührzeit und -geschwindigkeit ab, und kann durch entsprechende Probeversuche leicht ermittelt werden.

Die als diskontinuierliche organische Phase dienende Mischung enthält bis zu 97 Gewichtsprozent, bevorzugt 50 bis 95 Gewichtsprozent einzukapselndes Produkt und wenigstens 3 Gewichtsprozent, bevorzugt 5 bis 50 Gewichtsprozent eines Gemisches aus isocyanathaltigem und verkapptem Wandbildner. Das Gemisch aus isocyanathaltigem und verkapptem Wandbildner ist dabei mengenmäßig so zusammengesetzt, daß nach erfolgter Deblockierung durch das Wasser der kontinuierlichen Phase ein Molverhältnis der jeweiligen funktionellen Gruppen von 1 : 0,01 bis 1 : 100, bevorzugt 1 : 0,1 bis 1 : 10, besonders bevorzugt etwa 1 : 1, d. h. stöchiometrisch erhalten wird. Bei einer stöchiometrischen Arbeitsweise wird besonders sichergestellt, daß sämtliche Isocyanatgruppen unter Ausbildung einer chemisch einheitlichen polymeren Kapselwand ausreagieren und kein Kohlendioxid entwickelt wird.

Die als organische Phase zubereitete Mischung erweist sich unter Ausschluß von Feuchtigkeit als lagerstabil und wird bei Bedarf innerhalb einer kontinuierlichen wäßrigen Phase, der, wie bereits ausgeführt, Dispergierhilfsmittel zugefügt werden können, in einer solchen Menge dispergiert, daß die Konzentration der organischen Phase in der Dispersion 1 bis 50 Gewichtsprozent, bevorzugt 20 bis 40 Gewichtsprozent beträgt.

Es muß als überraschend gelten, daß trotz des hohen Wasserüberschusses innerhalb der wäßrigen Phase, bezogen auf die tatsächlich für die Freisetzung (Deblockierung) des in der organischen Phase befindlichen verkappten Wandbildners notwendige Wassermenge, die durch intensive Vermischung beider Phasen erfolgende Einstellung der Teilchengröße bequem erreichbar ist, und die Bildung der Kapselwände erst im Anschluß daran beim langsamen Rühren oder Stehenlassen der Dispersion einsetzt und beendet wird. Die Ausbildung der polymeren Kapselwände kann durch zusätzliches Erwärmen der Dispersion auf 20 bis 95 °C, bevorzugt 40 bis 70 °C, beschleunigt werden.

Je nach Einsatzgebiet der fertigen Mikrokapseln kann es wünschenswert sein, den Aufbau der Kapselwände zu modifizieren, beispielsweise bezüglich der mechanischen Stabilität, der Dichtigkeit, der Durchlässigkeit oder der Temperaturstabilität. Dies kann einmal durch die Vielzahl der einsetzbaren Isocyanate, zum anderen aber durch eine große Zahl von verkappten Wandbildnern geschehen. Außerdem können jeweils Gemische der Isocyanate bzw. der verkappten Wandbildner benutzt werden.

In einer weiteren erfindungsgemäßen Ausführungsform wird die chemische Modifizierung der Kapselwand dadurch erreicht, daß die verkappte Reaktionskomponente in solchen Mengen, bezogen auf das Isocyanat, benutzt wird, daß ein Teil des Isocyanats für Reaktionen mit anderen Reaktanden zur Verfügung steht. So kann beispielsweise das Isocyanat unter Bildung eines Amins hydrolysiert werden, das seinerseits mit weiterem Isocyanat unter Bildung eines Polyharnstoffes reagiert. Derartig hergestellte Mikrokapseln weisen einen chemisch gemischten polymeren Aufbau auf.

In einer anderen bevorzugten Ausführungsform trägt der Teil des Isocyanats, der für Reaktionen mit anderen Reaktanden zur Verfügung steht, dadurch zur Kapselwandbildung bei, daß man nach erfolgter Einstellung der Teilchengröße in die kontinuierliche wäßrige Phase zusätzlich kapselwandbildende Reaktionskomponenten gibt, die mindestens zwei NH-Gruppen oder eine NH- und eine OH-Gruppe besitzen. Dabei können sowohl solche Reaktionskomponenten verwendet werden, die mit der deblockierten Form der in der diskontinuierlichen Phase verkappt vorliegenden Reaktionskomponenten identisch sind, als auch solche, die von diesen verschieden sind. Es können auch Gemische von mindestens zwei Reaktanden in die wäßrige Phase zudosiert werden. Die Mengen der in der diskontinuierlichen Phase vorhandenen verkappten Reaktionskomponente und der in der wäßrigen Phase vorhandenen Reaktanden werden so aufeinander abgestimmt, daß die Summe ihrer funktionellen Gruppen zu den Isocyanaten ein Molverhältnis von 1 : 0,1 bis 1 : 100, bevorzugt 1 : 0,1 bis 1 : 10, besonders bevorzugt von ungefähr 1 : 1 bilden.

Bezüglich der Molprozente verteilen sich die funktionellen Gruppen von 1 bis 99 % auf die diskontinuierliche Phase und entsprechend 99 bis 1 % auf die kontinuierliche Phase, bevorzugt 25 bis 75 % bzw. 75 bis 25 %. Als Reaktanden kommen Hydroxiamine, aliphatische, cycloaliphatische oder aromatische Polyamine in Frage. Beispiele für solche Verbindungen sind: Ethanolamin, Diethanolamin, Triethanolamin, Diisopropanolamin, Hydrazinoethanol-(2), Hydrazin, Ethylendiamin-(1,2), Propylendiamin-(1,2), Propylendiamin-(1,3), Bis-(3-aminopropyl)-amin, Bis-(2-methylaminoethyl)-methylamin, 1,4-Diaminocyclohexan, 3-Amino-1-methyl-aminopropan, N-Hydroxy-ethylethylendiamin, N-Methyl-bis-(3-aminopropyl)-amin, 1,4-Diamino-n-butan, 1,6-Diamino-n-hexan, Ethylen-(1,2)-diamin-N-Ethyl-sulfonsäure (als Alkalisalz), N-Aminoethyl-ethylendiamin-(1,2), Bis-(N,N'-aminoethyl)-ethylendiamin-(1,2), Tetraethylenpentamin, Pentaethylenhexamin, 1,4-Diaminobenzol, 4,4-Diaminodiphenylmethan, 1,4-Diaminocyclohexan, 1-Amino-3,3,5-trimethyl-5-aminomethyl-cyclohexan.

Hydrazin und seine Derivate werden im vorliegenden Zusammenhang ebenfalls als Diamine angesprochen.

Für den Fall, daß Wasser, wäßrige Lösungen oder Dispersionen eingekapselt werden, besteht die kontinuierliche Phase aus einem Lösungsmittel oder einem Gemisch von mindestens zwei Lösungsmitteln, dem isocyanathaltigen Wandbildner, dem verkappt vorliegenden Wandbildner, und gegebenenfalls Dispergierhilfsmitteln in Form von oberflächenaktiven Mitteln und/oder Schutzkolloiden. Die Einsatzmengen an isocyanathaltigem und verkapptem (blockiertem) Wandbildner werden so gewählt, daß nach erfolgter Deblockierung durch das Wasser der diskontinuierlichen Phase ein Molverhältnis der jeweiligen funktionellen Gruppen von 1 : 0,05 bis 1 : 20, bevorzugt etwa 1 : 1, d. h. stöchiometrisch, erhalten wird.

Bei einer stöchiometrischen Arbeitsweise wird besonders sichergestellt, daß sämtliche Isocyanatgruppen unter Ausbildung einer chemisch einheitlichen polymeren Kapselwand ausreagieren, und kein Kohlendioxid entwickelt wird. Zur Modifizierung der erfindungsgemäß hergestellten Mikrokapseln können jeweils Gemische der Isocyanate bzw. der verkappten Wandbildner benutzt werden.

Die Menge der einzukapselnden wäßrigen Phase wird so gewählt, daß ihre Konzentration in der Dispersion 1 bis 50 Gewichtsprozent, bevorzugt 10 bis 30 Gewichtsprozent beträgt. Die Bildung der Kapselwände nach erfolgter Dispersion kann durch anschließendes Erwärmen auf 20 bis 95 °C, bevorzugt 40 bis 70 °C beschleunigt werden. Die so erhaltenen Kapseln besitzen ein Kern : Wand-Verhältnis von 95 : 5 bis 10 : 90, bevorzugt 90 : 10 bis 60 : 40.

Sie werden je nach Einsatzzweck als Kapselsuspension, gegebenenfalls nach vorherigem Austausch der kontinuierlichen Phase, oder nach Abtrennung von der organischen Phase getrocknet und als Kapselpulver eingesetzt.

Die verwendeten Lösungsmittel, welche die kontinuierliche Phase bilden, zeichnen sich auf der einen Seite durch eine extrem niedrige Wasseraufnahme und auf der anderen Seite durch eine ausreichende Löslichkeit für den verkappten und den isocyanathaltigen Wandbildner aus. Außerdem müssen sie gegenüber Isocyanaten inert sein. Es können auch Gemische von mindestens zwei verschiedenen Lösungsmitteln benutzt werden.

Als Beispiele gelten Kerosin, n-Paraffine, Isoparaffine, Cyclohexan, Methylcyclohexan, chloriertes Diphenyl, Silikonöl, Monochlorbenzol, 1,1,2-Trichlor-1,2,2-trifluorethan, teilhydrierte Terphenyle, alkylierte Diphenyle, alkylierte Napthaline, Aryl-ether, Arylalkylether, höheralkyliertes Benzol und andere.

In einer weiteren Ausführungsform des erfindungsgemäßen Verfahrens kann die wäßrige Phase, die eingekapselt werden soll, beliebige Mengen an kapselwandbildenden Reaktionskomponenten enthalten, die mindestens zwei NH-Gruppen oder eine NH- und eine OH-Gruppe besitzen. Sie können mit zum Aufbau der Kapselwand beitragen. Als geeignete Verbindungen kommen Hydroxiamine, aliphatische, cycloaliphatische und aromatische Polyamine in Frage, beispielsweise :

Ethanolamin, Diethanolamin, Triethanolamin, Diisopropanolamin, Hydrazinoethanol-(2), Hydrazin, Ethylendiamin-(1,2), Propylen-diamin-(1,2), Propylendiamin-(1,3), Bis-(3-aminopropyl)-amin, Bis-(2-methylamino-ethyl)-methyl-amin, 1,4-Diaminocyclohexan, 3-Amino-1-methyl-amino-propan, N-Hydroxy-ethylethylendiamin, N-Methyl-bis-(3-aminopropyl)-amin, 1,4-Diamino-n-butan, 1,6-Diamino-n-hexan, Ethylen-(1,2)-diamin-N-Ethyl-sulfonsäure (als Alkalisalz), N-Aminoethylethylendiamin-(1,2), Bis-(N,N'-aminoethyl)-ethylendiamin-(1,2), Tetraethylenpentamin, Pentaethylenhexamin 1,4-Diaminobenzol, 4,4-Diaminodiphenylmethan, 1,4-Diaminocyclohexan, 1-Amino-3,3,5-triethyl-5-aminoethyl-cyclohexan.

Hydrazin und seine Derivate werden im vorliegenden Zusammenhang ebenfalls als Diamine angesprochen.

Die Deblockierung der verkappten Wandbildner kann durch Zugabe von anorganischen oder organischen Säuren oder Salzen optimiert werden. Sie können in die wäßrige oder organische Phase vor, während oder nach der Herstellung der Dispersion zudosiert werden.

Die Reaktionsgeschwindigkeit der wandbildenden Reaktionspartner kann auch für die Polyharnstoff- und Polyurethanbildung bekannte Katalysatoren beeinflußt werden.

Geeignete Katalysatoren sind z. B. :

1. Tertiäre Amine, wie Triethylamin, Tributylamin, N-Methylmorpholin, N-Ethyl-morpholin, N-Cocomorpholin, N,N,N',N'-Tetramethyl-ethylendiamin, 1,4-Diaza-bicyclo-(2,2,2)-octan, N-methyl-N'-dimethylaminoethyl-piperazin, N,N-Dimethylbenzylamin, Bis-(N,N-diethylaminoethyl)-adipat, N,N-Diethylbenzyl-amin, Pentamethyldiethylentriamin, N,N-Dimethylcyclohexylamin, N,N,N',N'-Tetramethyl-1,3-butandiamin, N,N-Dimethyl-β-phenylethylamin, 1,2-Dimethylimidazol, 2-Methylimidazol.

2. Gegenüber Isocyanatgruppen aktive Wasserstoffatome aufweisende tertiäre Amine, z. B. Triethanolamin, Triisopropanolamin, N-Methyl-diethanolamin, N-Ethyl-diethanolamin, N,N-Dimethyl-ethanolamin, sowie deren Umsetzungsprodukte mit Alkylenoxiden, wie Propylenoxid und/oder Ethylenoxid.

3. Silaamine mit Kohlenstoff-Silizium-Bindungen, wie sie z. B. in der deutschen Patentschrift 1 229 290 beschrieben sind, z. B. 2,2,4-Trimethyl-2-silamorpholin, 1,3-Diethylamino-methyl-tetra-methyldisiloxan.

4. Stickstoffhaltige Basen wie Tetraalkylammoniumhydroxide, Alkalihydroxide wie Natriumhydroxid, Alkaliphenolate wie Natriumphenolat oder Alkali-alkoholate wie Natriummethylat und Hexahydrotriazine.

5. Organische Metallverbindungen, insbesondere organische Zinnverbindungen, vorzugsweise Zinn (II)-salze von Carbonsäuren wie Zinn(II)-acetat, Zinn(II)-octoat, Zinn(II)-ethylhexoat und Zinn(II)-laurat und die Dialkylzinnsalze von Carbonsäuren, wie z. B. Dibutyl-zinndiacetat, Dibutyl-zinndilaurat, Dibutylzinnmaleat oder Dioctylzinndiacetat.

Weitere Katalysatoren sowie Einzelheiten über ihre Wirkungsweise finden sich im Kunststoffhandbuch, Band VII, herausgegeben von Vieweg und Höchtlen, Carl-Hanser-Verlag München, 1966, besonders Seiten 96-102.

Die Katalysatoren werden in der Regel in einer Menge von etwa 0,01 bis 10 Gewichtsprozent, bezogen auf die Reaktanden, eingesetzt.

Die Mikrokapseln können kontinuierlich oder diskontinuierlich hergestellt werden. Man verwendet im allgemeinen Dispergiergeräte, die ein Schergefälle erzeugen. Beispiele hierfür sind Blatt-, Korb-, Schnellrührer, Kolloidmühlen, Homogenisatoren, Ultraschalldispergatoren, Düsen, Stahldüsen, Supratonmaschinen.

Die Stärke der Turbulenz beim Vermischen ist in erster Linie bestimmend für den Durchmesser der erhaltenen Mikrokapseln. Kapseln in der Größe von 1 bis 5 000 μm können hergestellt werden. Bevorzugt sind Kapseln mit Durchmessern von 2 bis 500 μm.

Der Kapseldurchmesser ist für die Leistungsfähigkeit des erfindungsgemäßen Verfahrens nicht kritisch und kann entsprechend dem Verwendungszweck optimiert werden.

Mit Hilfe des erfindungsgemäßen Verfahrens können beliebige feste oder flüssige Stoffe eingekapselt werden, z. B. organische Lösungsmittel, Flammschutzmittel, Klebstoffe, Katalysatoren, Lösungen von Farbstoffen und Leukofarbstoffen, Treibmittel, Öle, Wachse, Duftöle, Pflanzenschutzmittel, Dünger, Acrylate, Weichmacher und dergleichen.

Es muß als ausgesprochen überraschend gelten, daß die Zusammenführung der beiden, miteinander nicht mischbaren Phasen durch den erheblichen Wasserüberschuß beim Dispergieren und der sich anschließenden Ausbildung der polymeren Kapselwände ohne das Auftreten von Unregelmäßigkeiten durchgeführt wird.

Der gleichmäßige Wandaufbau und die Steuerbarkeit des Vernetzungsgrades während der wandbildenden Umsetzung durch geeignete Wahl der Reaktivität und Funktionalität der Reaktionspartner werden nicht beeinträchtigt. Trotz der sehr großen Hydrophilie der durch Wasser deblockierten Wandbildner werden nach ihrer Freisetzung keine spontanen oder unkontrollierten Übergänge in die wäßrige Phase beobachtet.

Es muß weiterhin als überraschend gelten, daß mit Hilfe des erfindungsgemäßen Verfahrens die Herstellung von Mikrokapseln mit größeren Durchmessern und ausreichender Stabilität ohne zusätzlich zu ergreifende Maßnahmen erfolgen kann.

In bisher bekannten Verfahren ist es für die Herstellung größerer Kapseln erforderlich, durch extrem lange Nachbehandlungszeiten der Kapseldispersionen oder aber durch Einsatz mehrfachstöchiometrischer Mengen des einen Wandbildners gegenüber dem anderen die erwünschte Stabilität zu erreichen. Diese Maßnahmen entfallen bei dem erfindungsgemäßen Verfahren.

Das erfindungsgemäße Verfahren bietet nicht nur bei der Herstellung von Mikrokapseln, sondern auch bei ihrer Aufarbeitung und weiteren Verwendung zahlreiche Vorteile.

Die für die Verkapselung notwendigen Kernmaterialien und die wandbildenden Reaktionskomponenten sind miteinander verträglich und können daher gemeinsam gelagert und bei Bedarf in einem Schritt bei der Herstellung der Dispersion zudosiert werden. Das bedeutet verfahrenstechnisch eine sehr große Vereinfachung, weil dadurch zusätzliche Maßnahmen, die bei der Durchführung bisher bekannter Verkapselungsverfahren notwendig sind, entfallen können.

Die Umsetzung der Isocyanate mit den deblockierten Reaktionspartnern verläuft ausreichend schnell, so daß leicht kontinuierlich gearbeitet werden kann. Hierbei ist sichergestellt, daß eine einwandfreie Einstellung der Teilchengröße und eine enge Teilchengrößenverteilung erzielt wird. Hohe Raum/Zeit-Ausbeuten sind möglich und für Verkapselungsverfahren sehr von Vorteil.

Da durch das erfindungsgemäße Verfahren eine $CO_2$-Entwicklung während der Kapselwandbildung vermieden wird, kann auf Antischaummittel verzichtet werden.

Die jeweils kontinuierliche Phase ist nach Fertigstellung der Kapseln praktisch frei von wandbildenden oder anderen Komponenten, was eine für gewisse Einsatzzwecke notwendige nachträgliche Formulierung der Kapselsuspension sehr erleichtert oder nach der Isolierung der Kapseln zu außerordentlich sauberen Kapselpulvern führt, ohne daß es eines vorherigen Austausches oder einer vorherigen Reinigung der kontinuierlichen Phase bedarf.

Der Vorteil dieser Arbeitsweise besteht zusätzlich darin, daß sie die Herstellung extrem dünner Kapselwände erlaubt, da der meist erforderliche Reinigungs- oder Austauschschritt entbehrlich ist, bei dem die Kapselwände normalerweise starken mechanischen Kräften ausgesetzt sind und daher eine an sich nicht erstrebenswerte Dicke der Kapselwand notwendig machten.

Da sich bei dem erfindungsgemäßen Verfahren der Kapselwandaufbau jeweils innerhalb einer Phase abspielt, läßt sich die Wanddicke sehr leicht einstellen, und das Kernmaterial bleibt frei von wandbildenden Reaktionskomponenten. Außerdem benötigt man für die Herstellung von Kapseln mit großen Durchmessern lediglich stöchiometrische Mengen an wandbildenden Reaktionskomponenten, was zu deutlichen Materialeinsparungen führt.

Die außerordentlich große Variabilität des Verfahrens ermöglicht durch die zusätzliche Verwendung von wandbildenden Reaktionskomponenten die Herstellung von Kapseln mit bisher nicht bekanntem Wandaufbau. Durch geeignete Auswahl im Aufbau der Reaktionspartner läßt sich zusätzlich in gewissen Grenzen der Charakter der entstehenden Kapselwandmembran beeinflussen, so daß es auch gelingt, neben einer ausreichenden Vernetzung eine gewisse Zähigkeit des Hüllenmaterials einzustellen.

(Siehe Tabelle, Seite 12 f.)

Beispiele der durch Kondensation von Polyaminen bzw. Hydroxiaminen mit Carbonylverbindungen hergestellten verkappten Reaktionskomponenten

| Bezeichnung der verkappten Reaktionskomponente | Polyamin bzw. Hydroxiamin | Carbonylverbindungen |
|---|---|---|
| A | Hydrazin | Aceton |
| B | " | Isobutyraldehyd |
| C | " | Methylisobutylketon |
| D | Ethylendiamin | Formaldehyd |
| E | 1,2-Diaminopropan | Formaldehyd |
| F | Bis-(N,N'-aminoethyl)ethylendiamin-(1,2) | Isobutyraldehyd |
| G | 1,6-Hexamethylendiamin | Isobutyraldehyd |
| H | " | Isobutyraldehyd durch Michael-Addition mit Acrylsäuremethylester modifiziert |
| I | Diethanolamin | Isobutyraldehyd |
| K | " | Formaldehyd |
| L | Isophorondiamin | Isobutyraldehyd durch Michael-Addition mit Acrylsäureethylester modifiziert |

Beispiel 1

93,5 g Diethoxy-thiophosphoryloxyimino-phenylacetonitril (94,6 %-iges Volaton) werden nacheinander zunächst mit 4,92 g eines biuretisierten Hexamethylendiisocyanats (NCO-Gehalt 22 %) und anschließend mit 2,0 g der Verbindung B unter Rühren homogen vermischt. Mit Hilfe einer Kotthoff-Mischsirene wird dieses Gemisch 2 Minuten lang bei 3860 U/min. in einer zuvor bereiteten Lösung emulgiert.

Diese Lösung besteht aus :

148,75 g Wasser, welches als Schutzkolloid 2 % Polyvinylalkohol (Mowiol 40-88) enthält, 26,25 g Wasser, das als Schutzkolloid 1 % Montmorillonit (Bentone EW) enthält, und 26,35 g Ethylenglykol.

Anschließend wird die Dispersion mit einem Laborrührer vom Typ Lenard-Rapid (200 U/min.) gerührt und 2 Stunden lang auf 50 °C erwärmt.

Der Durchmesser der resultierenden Kapsel beträgt 3 bis 30 µm. Das Kern/Wand-Verhältnis beträgt ungefähr 95 : 5.

Beispiel 2

93,5 g Diethoxy-thiophosphoryloxyimino-phenylacetonitril (94,6 %-iges Volaton) werden nacheinander zunächst mit 18,75 g eines biuretisierten Hexamethylendiisocyanats (NCO-Gehalt 22 %) und anschließend mit 6,59 g der Verbindung G unter Rühren homogen vermischt. Mit Hilfe einer Kotthoff-Mischsirene wird dieses Gemisch 2 Minuten lang bei 3440 U/min. in einer zuvor bereiteten Lösung emulgiert.

Die Lösung besteht aus :

125 g Wasser, welches als Schutzkolloid 0,5 % Polyvinylalkohol (Mowiol 40-88) enthält, 50 g Wasser, das als Schutzkolloid 1 % Montmorillonit (Bentone EW) enthält, und 26,35 g Ethylenglykol.

Während der zweiminütigen Emulgierzeit fügt man nach 1 Minute in die Dispersion eine Mischung aus 3,42 g Hexamethylendiamin und 15 g Wasser zu.

Anschließend wird die Dispersion mit einem Laborrührer auf 50 °C erwärmt.

Der Durchmesser der resultierenden Kapseln beträgt ungefähr 5 bis 40 µm.

Beispiel 3

240 g Solventnaphtha (Aromatengemisch der BV-Aral) werden nacheinander zunächst mit 60 g eines Isocyanuratgruppen enthaltenden Hexamethylendiisocyanats (NCO-Gehalt 22,5 %) und anschließend mit 34,7 g der Verbindung G unter Rühren homogen vermischt. Mit Hilfe eines Laborrührers vom Typ Lenard-Rapid wird dieses Gemisch bei 330 U/min. in 1 190 g Wasser emulgiert, welches als Schutzkolloid 1 %

Gelatine enthält. Anschließend wird die Dispersion 2 Stunden bei 60 °C gerührt. Man erhält Kapseln mit einem Durchmesser von 240 bis 1 100 µm.

Beispiel 4

12 g Solventnaphtha (Aromatengemisch der BV-Aral) werden nacheinander zunächst mit 3 g eines Oxadiazintriongruppen enthaltenden Hexamethylendiisocyanats (NCO-Gehalt 20,3 %) und anschließend mit 0,5 g der Verbindung I unter Rühren homogen vermischt.

Mit Hilfe eines Laborrührers vom Typ Lenard-Rapid wird dieses Gemisch bei 500 U/min. in 150 g Wasser emulgiert, das als Schutzkolloid 2 % Polyvinylalkohol (Mowiol 8-88) enthält. Anschließend wird die Dispersion 2 Stunden bei 50 °C nachgerührt, um die Kapselwandbildung zu vervollständigen. Der Durchmesser der resultierenden Kapseln beträgt 180 bis 850 µm.

Beispiel 5

12 g Ethylenglykoldimethacrylat werden nacheinander zunächst mit 1,33 g eines biuretisierten Hexamethylendiisocyanats (NCO-Gehalt 22 %) und anschließend mit 0,55 g der Verbindung F unter Rühren homogen vermischt. Mit Hilfe eines Laborrührers vom Typ Lenard-Rapid wird dieses Gemisch bei 500 U/min. in 150 g Wasser emugliert, das als Schutzkolloid 1 % Hydroxymethylcellulose (Tylose MH 50) enthält. Anschließend wird die Dispersion 2 Stunden bei 50 °C nachgerührt, um die Kapselwandbildung zu vervollständigen. Der Kapseldurchmesser beträgt 150 bis 800 µm.

Beispiel 6

12 g Solventnaphtha (Aromatengemisch der BV-Aral) werden nacheinander zunächst mit 3 g eines biuretisierten Hexamethylendiisocyanats (NCO-Gehalt 22 %) und anschließend mit 0,5 g Verbindung K unter Rühren homogen vermischt. Mit Hilfe eines Laborrührers vom Typ Lenard-Rapid wird dieses Gemisch bei 500 U/min. in 150 g Wasser emulgiert, das als Schutzkolloid 2 % Polyvinylalkohol (Mowiol 8-88) enthält. Anschließend wird die Dispersion 2 Stunden bei 50 °C nachgerührt. Die Kapselgröße beträgt 120 bis 750 µm.

Beispiel 7

93,5 g Diethoxy-thiophosphoryloxyimino-phenylacetonitril (94,6 %-iges Volaton) werden nacheinander zunächst mit 18,75 g eines biuretisierten Hexamethylendiisocyanats (NCO-Gehalt 22 %) und anschließend mit 7,69 g der Verbindung C unter Rühren homogen vermischt. Anschließend wird die Mischung analog Beispiel 1 in der dort beschriebenen Weise weiterverarbeitet. Man erhält Mikrokapseln mit einem Durchmesser von 3 bis 30 µm. Das Kern/Wand-Verhältnis beträgt 78 : 22.

Beispiel 8

12 g Methylenchlorid werden nacheinander zunächst mit 3 g eines biuretisierten Hexamethylendiisocyanats (NCO-Gehalt 22 %) und anschließend mit 0,79 g der Verbindung D unter Rühren homogen vermischt. Mit Hilfe eines Laborrührers vom Typ Lenard-Rapid wird dieses Gemisch bei 500 U/min. in 150 g Wasser, das als Schutzkolloid 0,5 % Polyvinylalkohol (Mowiol 40-88) enthält, emulgiert. Anschließend wird die Dispersion 2 Stunden bei 50 °C zur Vervollständigung der Kapselwandbildung nachgerührt. Die Kapselgröße beträgt 200 bis 950 µm.

Beispiel 9

Die Verkapselung von 12 g Methylenchlorid erfolgt analog Beispiel 8. Anstelle der Verbindung D werden 0,92 g der Verbindung E eingesetzt. Die Kapseln haben einen Durchmesser von 200 bis 950 µm.

Beispiel 10

Die Verkapselung von 12 g Solventnaphtha erfolgt wie in Beispiel 6. Anstelle der Verbindung K werden 0,5 g der Verbindung H eingesetzt. Die Kapselgröße beträgt 160 bis 850 µm.

Beispiel 11

128 g Tri-n-butylamin werden nacheinander zunächst mit 10 g Aceton, 10 g Toluol und 32 g eines Isocyanuratgruppen enthaltenden Hexamethylendiisocyanats (NCO-Gehalt 22,5 %) sowie 9,38 g der Verbindung A intensiv vermischt. Mit Hilfe einer Kotthoff-Mischsirene wird dieses Gemisch 1 Minute lang bei 8330 U/min. in einer zuvor bereiteten Lösung aus 333 g Wasser emulgiert, das als Schutzkolloid 1 % Hydroxymethylcellulose (Tylose MH 50) enthält. Anschließend wird die Dispersion mit einem Laborrührer

vom Typ Lenard-Rapid bei 1 000 U/min. 1 Stunde lang bei 70 °C nachgerührt. Man erhält Kapseln mit einem Durchmesser von 3 bis 30 µm.

Beispiel 12

93,5 g Diethoxy-thiophosphoryloxyimino-phenylacetonitril (94,6 %-iges Volaton) werden nacheinander zunächst mit 18,75 g 4,4'-Diphenylmethandiisocyanat (Desmodur 44 V 20, NCO-Gehalt 31 %) und anschließend mit 8,71 g der Verbindung B unter Rühren homogen vermischt. Anschließend wird die Mischung analog Beispiel 1 in der dort beschriebenen Lösung emulgiert (Kotthoff-Mischsirene : 2 Min. bei 3 440 U/min.). Der Kapseldurchmesser beträgt 3 bis 40 µm.

Beispiel 13

a) 10 g eines biuretisierten Hexamethylendiisocyanates (trifunktionell, NCO-Gehalt 21,4 %) werden mit 3,57 g der Komponente B vermischt. Das Gemisch hat eine Topfzeit von mehr als zwei Stunden. Das Gemisch wird mit einer Kottkoff-Mischsirene in 10 Min. mit 950 U/min. in 300 g wäßriger Lösung, welche 0,5 % Polyvinylalkohol (Mowiol 26-88) als Schutzkolloid enthält, emulgiert und anschließend 1,5 Std. mit einem Laborrührer mit 500 U/min. nachgerührt. Es entstehen sehr harte Vollperlen mit 30-280 µm Durchmesser.

b) 10 g eines biuretisierten Hexamethylendiisocyanates (trifunktionell, NCO-Gehalt 21,4 %) werden mit 5,71 g der Komponente G vermischt. Das Gemisch wird nach 30 Min. zähflüssig. Innerhalb dieser Zeit kann das Gemisch mit einer Kotthoff-Mischsirene 10' mit 9 500 U/min. in einer wäßrigen Lösung wie in Beispiel 13 a) emulgiert und anschließend zwei Stunden mit einem Laborrührer mit 500 U/min. nachgerührt werden. Es entstehen harte Vollperlen mit 3-10 µm Durchmesser.

c) 10 g eines biuretisierten Hexamethylendiisocyanates (trifunktional, NCO-Gehalt 21,4 %) werden mit 11,82 g der Komponente L vermischt. Das Gemisch wird 30 Min. nach der Herstellung mit einer Kottkoff-Mischsirene 3 Minuten lang bei 1 800 U/min. in einer wäßrigen Lösung wie in Beispiel 13a emulgiert und danach 1 Std. mit einem Laborrührer mit 500 U/min. nachgerührt. Es entstehen harte Vollperlen mit 5-170 µm Durchmesser.

d) 10 g eines biuretisierten Hexamethylendiisocyanates (trifunktional, NCO-Gehalt 21,4 %) werden mit 10,09 g der Komponente H vermischt. Das Gemisch hat eine Topfzeit von mehr als zwei Stunden. 30 Min. nach der Herstellung wird das Gemisch mit einer Kotthoff-Mischsirene 10 Min. lang bei 950 U/min. in einer wäßrigen Vorlage wie in Beispiel 13a emulgiert und danach 1 Stunde mit einem Laborrührer mit 500 U/min. nachgerührt. Es entstehen harte Vollperlen mit Durchmessern von 30-300 µm, die sich bei Raumtemperatur agglomeratfrei auf einem Filter zu einem gut rieselfähigen Kapselpulver trocknen lassen.

Beispiel 14

3 g eines Triisocyanates, wie es in Beispiel 13 eingesetzt wird, und 1,71 g der Komponente G werden vermischt. Nach 1 Min. werden 15 g Quarzkristalle mit einem mittleren Durchmesser von 200 µm zugegeben und die drei Bestandteile zu einem homogenen Brei vermischt.

Der Brei wird mit einer Kottkoff-Mischsirene in 300 ml einer wäßrigen Lösung, welche 0,02 % Polyvinylalkohol (Moviol 26-88) als schutzkolloid enthält, bei Raumtemperatur 0,5 Min. mit 950 U/min. und 1 Min. mit 6 050 U/min. dispergiert. Anschließend wird 1 Stunde mit einem Laborrührer mit 750 U/min. nachgerührt. Die Quarzkristalle sind danach einzeln oder zu mehreren vollständig mit Harz umhüllt. Der Durchmesser der Teilchen liegt zwischen 200 und 800 µm.

Beispiel 15

Aus 3 g eines Triisocyanates, wie es in Beispiel 13 eingesetzt wird, 3,55 g der Komponente L und 15 g Quarzkristallen mit 100 bis 300 µm Durchmesser wird ein gleichmäßiger Brei hergestellt und wie in Beispiel 14 dispergiert und nachgerührt. Es entstehen Agglomerate bis 5 mm Durchmesser, wobei alle Kristalle mit Harz umhüllt sind.

Beispiel 16

Aus 3 g eines Triisocyanates, wie es in Beispiel 13 eingesetzt wird, 3,03 g der Komponente H und 15 g Quarzkristallen mit 100 bis 300 µm Durchmesser wird ein gleichmäßiger Brei hergestellt und wie in Beispiel 14 in einer wäßrigen Moviollösung dispergiert. Anschließend wird der Slurry zwei Stunden mit einem Laborrührer mit 500 U/min. nachgerührt und dabei während 50 Min. auf 60 °C erwärmt. Nach der Abkühlung auf Raumtemperatur erhält man einzelne, vollständig mit Harz umhüllte Kristalle.

Beispiel 17

3 g eines Triisocyanates, wie es in Beispiel 13 eingesetzt wird, und 0,86 g der komponente A werden

homogen vermischt. In dieser Mischung werden 5 g Lucidol Pulver 50 (Benzoylperoxid mit Weichmacher phlegmatisiert) der Akzo Chemie GmbH, 4 240 Emmerich, zugegeben und zu einem homogenen Brei vermischt.

Der Brei wird mit einer Kottkoff-Mischsirene wie in Beispiel 14 bei Raumtemperatur in einer wäßrigen Moviollösung disperigert. Anschließend wird der Slurry insgesamt 130 min. mit einem Laborrührer mit 700 U/min. nachgerührt und dabei 60 min. lang auf 60 °C gehalten. Nach Abkühlung auf Raumtemperatur wird abfiltriert und getrocknet. Man erhält vollständig mit Harz umhüllte Agglomerate von 200 µm Durchmesser.

Beispiel 18

Beispiel 17 wird bis zur Dispergierung des Breies in der wäßrigen Moviollösung wiederholt. Anschließend wird der Slurry zur Nachrührung mit 700 U/min. an einem Laborrührer umgesetzt und eine Mischung aus 10 ml 37 %iger HCl und 10 ml Wasser zugegeben. Innerhalb von 60 Min. bilden sich bei Raumtemperatur vollständig mit ausgehärtetem Harz umhüllte Agglomerate von 500 µm Durchmesser, die abfiltriert und ohne Verklebung an der Luft getrocknet werden können.

Beispiel 19

Zur Prüfung der Wirksamkeit des umhüllten Lucidol-Pulvers 50 werden folgende Mischungen angesetzt und geprüft :

a) 9,63 g Ethylenglykoldimethacrylat
0,04 g Saccharin
0,50 g umhülltes Lucidolpulver aus Beispiel 17
0,03 g Dimethyltoluidin.

Die Topfzeit dieser Mischung bis zur Verfestigung beträgt 120 Min. Mit der flüssigen Mischung werden die Schäfte von Eisenschrauben (M 14) beschichtet, so daß die Gewindegänge gerade gefüllt sind. Danach wird sofort eine Mutter auf den Schaft gedreht. Dabei werden die Lucidolkapseln zermahlen, worauf sich die Mischung sehr schnell verfestigt. Nach einer Aushärtezeit von 48 Std. werden Öffnungsdrehmomente der verklebten Muttern von 20 bis 27 Nm gemessen.

b) Beispiel 19a wird mit umhülltem Lucidolpulver aus Beispiel 18 wiederholt.

Die Topfzeit der Mischung bis zur Verfestigung beträgt 30 min. Die Öffnungsdrehmomente der gesicherten Muttern, gemessen nach einer Aushärtezeit von 48 Std., liegen zwischen 28 und 30 Nm.

c) Im Vergleich zu den Beispielen 19a und 19b wird folgende Mischung mit nicht-umhülltem Lucidolpulver 50 angesetzt :

9,63 g Ethylenglykoldimethylacrylat
0,04 g Saccharin
0,30 g Lucidolpulver 50
0,03 g Dimethyltoluidin.

Die Topfzeit dieser Mischung liegt zwischen 50 und 60 Sec., so daß von jeder Mischung jeweils nur wenige Schrauben beschichtet und mit Muttern versehen werden können. Nach 48 Std. Aushärtezeit werden Öffnungsdrehmomente der gesicherten Muttern zwischen 28 und 37 Nm gemessen. Ungesicherte Muttern haben ein Öffnungsdrehmoment unter 1 Nm.

Beispiel 20

300 g Chlorbenzollösung, welche 1,5 % Ethylzellulose enthält, wird bei Raumtemperatur vorgelegt. Mit Hilfe eines Laborrührers (Typ Lenard Rapid, 700 U/min., 1,5 Min.) werden 10 g destilliertes Wasser in der Vorlage auf eine Tröpfchengröße von 100-150 µm Durchmesser emulgiert.

Nach 1,5 Min. wird die Drehzahl auf 350 U/min. reduziert und eine wandbildende Lösung aus

63,93 Chlorbenzol
5,00 g eines Triisocyanates, wie es in Beispiel 13 eingesetzt wird, und
1,07 g von Komponente D zugegeben und insgesamt 62 Min. bei 350 U/min. weitergerührt.

Nach 5 Min. bilden sich die ersten sichtbaren Kapselwände, die sich im Verlauf von weiteren 10 Min. stabilisieren. Die gebildeten Mikrokapseln sind glatt, klar durchsichtig, vorwiegend rund mit leichten Dellen und mit Durchmessern von 40 bis 160 µm.

Beispiel 21

Eine emulsion wird wie in Beispiel 20 hergestellt. Nach 1,5 Min. wird die Drehzahl auf 350 U/min.

reduziert, eine wandbildende Lösung aus

60,18 g Chlorbenzol
5,00 g eines Triisocyanates, wie es in Beispiel 13 eingesetzt wird, und
4,82 g von Komponente G zugegeben und insgesamt 120 Min. weitergerührt.

Nach 15 Min. bilden sich sichtbare Hüllen, die sich innerhalb von 100 Min. stabilisieren. Es entstehen klar durchsichtige, wassergefüllte Mikrokapseln mit glatter Oberfläche im Bereich von 50 bis 170 µm Durchmesser.

Beispiel 22

Eine Emulsion wird wie in Beispiel 20 hergestellt. Nach 1,5 Min. wird die Drehzahl auf 350 U/min. reduziert, eine wandbildende Lösung aus

56 g Chlorbenzol
5 g eines Triisocyanates, wie es in Beispiel 13 eingesetzt wird, und
9 g von Komponente F zugegeben und insgesamt 120 Min. weitergerührt.

Es bilden sich sofort sichtbare Hüllen, die sich innerhalb von 30 Min. stabilisieren. Die gebildeten Mikrokapseln sind klar durchsichtig, mit glatter Oberfläche und vorwiegend runder, zum Teil eingedellter Form. Die Kapseldurchmesser liegen zwischen 60 und 170 µm.

Beispiel 23

Eine Emulsion wird wie in Beispiel 20 hergestellt. Nach 1,5 Min. wird die Drehzahl auf 350 U/min. reduziert, eine wandbildende Lösung aus

59,7 g Chlorbenzol
5,0 g Hexamethylendiisocyanat (50,0 % NCO) und
5,3 g von Komponente F zugegeben und insgesamt 120 Min. weitergerührt.

Nach 5 Min. bilden sich sichtbare Hüllen, die sich innerhalb von 30 Min. zu Kapselwänden mit leicht faltiger Oberfläche stabilisieren. Die runden, klar durchsichtigen Mikrokapseln haben 20 bis 150 µm Durchmesser.

Beispiel 24

Eine Emulsion wird wie in Beispiel 20 hergestellt. Nach 1,5 Min. wird die Drehzahl auf 350 U/min. reduziert, eine wandbildende Lösung aus

62,5 g Chlorbenzol
5,0 g Hexamethylendiisocyanat (50,0 % NCO-Gehalt) und
2,5 g von Komponente D zugegeben und insgesamt 120 Min. weitergerührt.

Nach 5 Min. bilden sich sichtbare Hüllen, die sich innerhalb von 30 Min. stabilisieren. Die gebildeten Mikrokapseln sind klar durchsichtig, besitzen faltige Oberflächen und vorwiegend eingefallene Kugelform. Ihre Durchmesser liegen zwischen 60 und 160 µm.

Beispiel 25

Eine Emulsion wird wie in Beispiel 20 hergestellt. Nach 1,5 Min. wird die Drehzahl auf 350 U/min. reduziert, eine wandbildende Lösung aus

61,15 g Chlorbenzol
5,00 g eines eine Carbodiimidgruppe enthaltenden Diisocyanates (hergestellt durch Carbodiimidisierung von 2,4-Toluylendiisocyanat), Molekulargewicht 307, NCO-Gehalt 27,6 % und
3,85 g von Komponente G zugegeben und insgesamt 60 Min. weitergerührt.

Die sofort nach Zugabe der wandbildenden Lösung sichtbaren Hüllen stabilisieren sich in wenigen Min. Es bilden sich klar durchsichtige, vorwiegend runde Mikrokapseln mit 30 bis 150 µm Durchmesser.

Beispiel 26

Beispiel 25 wird wiederholt, wobei die wandbildende lösung jetzt aus

62,2 g Chlorbenzol
5,0 g des eine Carbodiimidgruppe enthaltenden Diisocyanates wie in Beispiel 25 und
2,8 g Komponente D besteht.

Nach Zugabe der wandbildenden Lösung erfolgt die Hüllenbildung sofort. Die entstandenen Mikrokapseln sind rund, klar durchsichtig, mit glatter Oberfläche und besitzen Durchmesser von 10-140 µm.

Beispiel 27

Beispiel 26 wird wiederholt, wobei statt Wasser 10 g HCl-Lösung mit 1 % HCl-Gehalt emulgiert wird. Die Kapselwand stabilisiert sich schneller als in Beispiel 13. Die gebildeten Mikrokapseln sind trüb, kartoffelförmig, mit faltiger Oberfläche. Die Kapseln haben den gleichen Durchmesserbereich wie in Beispiel 26, die Kapselwände sind jedoch deutlich härter.

Beispiel 28

Beispiel 27 wird wiederholt. Als Isocyanatkomponente der wandbildenden Lösung werden 5 g eines Carbodiimidgruppen enthaltenden Polyisocyanates mit einem NCO-Gehalt von 5,6 % eingesetzt, dessen Herstellung nachfolgend beschrieben ist : 139,2 g einer Mischung aus 65 % 2,4-Toluylendiisocyanat und 35 % 2,6-Toluylen-diisocyanat werden bei Raumtemperatur mit 2 g Phospholinoxid gut gemischt und in einen 1 l-Pappbecher gegeben. Die Mischung reagiert, schäumt durch $CO_2$-Bildung bis über den Becherrand auf und erhärtet innerhalb einiger Stunden mit einem Schaumvolumen von 1,5 bis 2 l. Nach 15 Stunden wird der spröde Schaum zermörsert. Das Granulat hat ein mittleres Molekulargewicht von etwa 1 500, enthält ca. 20 % Carbodiimidgruppen und 4-7 % NCO-Gruppen.

Nach Zugabe der wandbildenden Lösung entstehen sofort klar durchsichtige, runde Mikrokapseln mit glatter Oberfläche und Durchmessern zwischen 30 und 130 µm.

**Ansprüche**

1. Verfahren zum Einkapseln von Produkten in Polymeren mit Hilfe des Grenzflächenpolymerisationsverfahrens, bei dem eine stabilisierte Dispersion von Tröpfchen einer ersten Flüssigkeit, die eingekapselt werden soll, bzw. eine stabilisierte Dispersion von Feststoffpartikeln, die eingekapselt werden sollen, in einer die kontinuierliche Phase darstellenden zweiten Flüssigkeit gebildet wird, dadurch gekennzeichnet, daß die eine der kapselwandbildenden Reaktionskomponenten in freier Form und die andere der kapselwandbildenden Reaktionskomponenten in reversibel blockierter Form vorliegt, beide Reaktionskomponenten sich entweder in der ersten oder in der zweiten Flüssigkeit befinden, ohne miteinander zu reagieren, und die in reversibel blockierter Form vorliegende Reaktionskomponente durch in der zweiten bzw. ersten Flüssigkeit befindliches Wasser deblockiert wird und dann mit der in freier Form vorliegenden Reaktionskomponente unter Bildung einer polymeren Kapselwand reagiert, wobei die Tröpfchen der ersten Flüssigkeit bzw. die Feststoffpartikel in kleine, aus Polymermaterial bestehende Kapseln eingebettet werden.

2. Verfahren nach Anspruch 1, dadurch gekennzeichnet, daß als erste Flüssigkeit eine organische Flüssigkeit und als zweite Flüssigkeit eine wäßrige Flüssigkeit verwendet wird, wobei die organische in der wäßrigen Flüssigkeit unlöslich ist.

3. Verfahren nach Anspruch 1, dadurch gekennzeichnet, daß als erste Flüssigkeit eine wäßrige Flüssigkeit und als zweite Flüssigkeit eine organische Flüssigkeit verwendet wird, wobei die wäßrige in der organischen Flüssigkeit unlöslich ist.

4. Verfahren nach Anspruch 1 bis 3, dadurch gekennzeichnet, daß die frei vorliegende kapselwandbildende Reaktionskomponente mindestens zwei Isocyanatgruppen enthält.

5. Verfahren nach Anspruch 1 bis 3, dadurch gekennzeichnet, daß die in reversibel blockierter Form vorliegenden Reaktionskomponenten mindestens zwei reversibel blockierte funktionelle Gruppen enthalten, die durch Wasser deblockiert werden und mindestens zwei NH-Gruppen oder eine NH- und eine OH-Gruppe aufweisen.

6. Verfahren nach Anspruch 5, dadurch gekennzeichnet, daß die in reversibel blockierter Form vorliegenden Reaktionskomponenten verkappte Polyamine bzw. Hydroxiamine sind, die durch Wasser in die freien Polyamine bzw. Hydroxiamine übergeführt werden.

7. Verfahren nach Anspruch 1 bis 3, dadurch gekennzeichnet, daß die wäßrige Flüssigkeit zusätzlich kapselwandbildende Reaktionskomponenten enthält, die mindestens zwei NH-Gruppen oder eine NH- und eine OH-Gruppe besitzen.

8. Verfahren nach Anspruch 7, dadurch gekennzeichnet, daß die zusätzlich verwendeten kapselwandbildenden Reaktionskomponenten Polyamine und/oder Hydroxiamine sind.

## Claims

1. Process for encapsulating products in polymers by interfacial polymerisation, in which a stabilised dispersion of droplets of a first liquid which is to be encapsulated or a stabilised dispersion of solid particles which are to be encapsulated is formed in a second liquid representing the continuous phase, characterised in that the one capsule-wall-forming reaction component is present in free form while the other capsule-wall-forming reaction component is present in reversibly blocked form, both reaction components are present either in the first or in the second liquid without reacting with one another and the reaction component which is present in reversibly blocked form is deblocked by means of water present in the second or first liquid and then reacts with the reaction component present in free form to form a polymeric capsule wall, the droplets of the first liquid or the solid particles being encapsulated in small capsules consisting of polymeric material.

2. Process according to Claim 1, characterised in that an organic liquid is used as the first liquid and an aqueous liquid is used as the second liquid, the organic liquid being insoluble in the aqueous liquid.

3. Process according to Claim 1, characterised in that an aqueous liquid is used as the first liquid and an organic liquid is used as the second liquid, the aqueous liquid being insoluble in the organic liquid.

4. Process according to Claim 1 to 3, characterised in that the capsule-wall-forming reaction component which is present in free form contains at least two isocyanate groups.

5. Process according to Claim 1 to 3, characterised in that the reaction components present in reversibly blocked form contain at least two reversibly blocked functional groups which are deblocked by water and contain at least two NH-groups or one NH-group and one OH-group.

6. Process according to Claim 5, characterised in that the reaction components present in reversibly blocked form are blocked polyamines or hydroxyamines which are converted into the free polyamines or hydroxyamines by water.

7. Process according to Claim 1 to 3, characterised in that the aqueous liquid additionally contains capsule-wall-forming reaction components which contain at least two NH-groups or one NH-group and one OH-group.

8. Process according to Claim 7, characterised in that the capsule-wall-forming reaction components additionally used are polyamines and/or hydroxyamines

## Revendications

1. Procédé d'encapsulation de produits dans des polymères à l'aide d'un procédé de polymérisation interfaciale, selon lequel on forme une dispersion stabilisée de gouttelettes d'un premier liquide, qui doit être encapsulé, ou une dispersion stabilisée de particules solides, qui doivent être encapsulées, dans un second liquide constituant la phase continue, procédé caractérisé en ce que l'un des composants destinés à réagir pour former la paroi des capsules se trouve sous forme libre et l'autre composant destiné à former par réaction la paroi des capsules se trouve sous forme réversiblement bloquée, les deux composants destinés à réagir se trouvent dans le premier ou dans le second liquide sans réagir l'un sur l'autre, et le composant destiné à réagir et se trouvant sous forme réversiblement bloquée est débloqué par l'eau se trouvant dans le second ou dans le premier liquide, et puis il réagit avec le composant se trouvant sous forme libre, en formant une paroi polymère de capsule, de sorte que les gouttelettes du premier liquide ou les particules solides sont enrobées dans de petites capsules consistant en de la matière polymère.

2. Procédé selon la revendication 1, caractérisé en ce que l'on utilise comme premier liquide un liquide organique et comme second liquide un liquide aqueux, le liquide organique étant insoluble dans le liquide aqueux.

3. Procédé selon la revendication 1, caractérisé en ce qu'on utilise comme premier liquide un liquide aqueux et comme second liquide un liquide organique, le liquide aqueux étant insoluble dans le liquide organique.

4. Procédé selon l'une quelconque des revendications 1 à 3, caractérisé en ce que le composant, présent sous forme libre et destiné à former par réaction la paroi des capsules, contient au moins deux groupes isocyanates.

5. Procédé selon l'une quelconque des revendications 1 à 3, caractérisé en ce que les composants, présents sous forme réversiblement bloquée et destinés à réagir, contiennent au moins deux groupes fonctionnels réversiblement bloqués qui sont débloqués par l'eau et ils présentent au moins deux groupes NH ou bien un groupe NH et un groupe OH.

6. Procédé selon la revendication 5, caractérisé en ce que les composants présents sous forme réversiblement bloquée et destinés à réagir sont des polyamines ou hydroxyamines coiffées que l'eau transforme en des polyamines ou des hydroxamines libres.

7. Procédé selon l'une quelconque des revendications 1 à 3, caractérisé en ce que le liquide aqueux contient en outre des composants pouvant par leur réaction former la paroi des capsules et qui possèdent au moins deux groupes NH ou bien un groupe NH et un groupe OH.

8. Procédé selon la revendication 7, caractérisé en ce que les composants destinés à former par leur

réaction la paroi des capsules et que l'on utilise en supplément sont des polyamines et/ou des hydroxyamines.